# EUROPÄISCHE PATENTSCHRIFT

(11) **EP 1 659 277 B1**
(45) Veröffentlichungstag und Bekanntmachung des Hinweises auf die Patenterteilung: **03.01.2007**
(21) Anmeldenummer: 05022762.8
(22) Anmeldetag: 19.10.2005
(51) Int. Cl.: F02C 3/30, F02C 7/141, F01K 21/04

(54) **Vorrichtung zum Einspritzen von Wasser oder Wasserdampf in das Arbeitsmittel einer Gasturbinenanlage**
Device for water or steam injection into the working medium of a gas turbine
Dispositif pour l'injection d'eau ou de vapeur dans la substance de travail d'une turbine à gas

(30) Priorität: 28.10.2004 DE 102004052483
(43) Veröffentlichungstag der Anmeldung: 24.05.2006
(73) Patentinhaber: MAN TURBO AG, 46145 Oberhausen (DE)
(72) Erfinder: Jeske, Dr. Hans-Otto, 46485 Wesel (DE); Aschenbruck, Emil, 47167 Duisburg (DE)
(74) Vertreter: Radünz, Ingo

(56) Entgegenhaltungen:
- US-A- 4 377 067
- US-A- 5 697 209
- US-A- 5 816 041
- US-A- 6 112 511

## Beschreibung

Die Erfindung betrifft eine Vorrichtung zum Einspritzen von Wasser oder Wasserdampf in das Arbeitsmittel einer Gasturbinenanlage mit den Merkmalen des Oberbegriffes des Anspruches 1.

Zur Reduzierung der NOₓ-Emissionen im Turbinenabgas wird Wasserdampf oder Wasser in die Brennkammer der Gasturbinenanlage eingespritzt. Hierdurch wird die Flammentemperatur abgesenkt und damit niedrige NOₓ-Emissionen erreicht.

Ferner wird die Technik des Einspritzens von Wasser oder Wasserdampf dazu'genutzt, um eine Leistungssteigerung der Gasturbine zu erzielen. Durch die Wasser- oder Wasserdampfzugabe erhöht sich die spezifische Wärmekapazität des Heißgases, so dass eine größere Enthalpiedifferenz in der Turbine zur Verfügung steht. Durch die Wasser- oder Wasserdampfzufuhr wird der Massenstrom in der Gasturbine erhöht, wodurch bei zusätzlicher Brennstoffzugabe die Leistung nochmals gesteigert wird. Einhergehend mit der Leistungssteigerung ist die Verbesserung des Wirkungsgrades der Gasturbine.

Bekannt ist, das Wasser oder den Wasserdampf direkt durch die Brennstoffdüsen der Brennkammer einzuspritzen. Aufgrund der beengten Platzverhältnisse im Brennkammerbereich ist jedoch die Anordnung von Einspritzdüsen für eine gute und gleichmäßige Durchmischung der Luft mit Wasserdampf oder Wasser nur schwer zu erreichen. Ferner besteht die Gefahr, dass durch das Auftreffen des eingespritzten Mediums auf die heißen Wandungen der Brennkammer kritische Thermospannungen erzeugt werden.

Aus der DE 102 05 972 A1 ist eine Gasturbogruppe bestehend aus Kompressor, Brennkammer und Gasturbine bekannt, bei der zur Steigerung der Nutzleistung Wasser oder Wasserdampf auf die erste Turbinenschaufelreihe in den Pfad der Verbrennungsluft hinter der Brennkammer eingeleitet wird.

Aus der JP 05332164 A ist eine Gasturbinenanlage bekannt, bei welcher der Gasturbine im Abgaspfad ein Wärmetauscher zur Erwärmung der in dem Kompressor der Gasturbinenanlage verdichteten Verbrennungsluft nachgeschaltet ist. Um die Haltbarkeit des Wärmetauschers ohne Beeinträchtigung der Wärmeausnutzung des Turbinenabgases zu erhöhen, wird Wasser oder Wasserdampf in die verdichtete Verbrennungsluft vor deren Eintritt in den Wärmetauscher eingeleitet.

Weiterhin offenbart US 5 697 209 eine Vorrichtung zum Einspritzen von Wasserdampf in das Arbeitsmittel einer Gasturbinenanlage.

Der Erfindung liegt die Aufgabe zugrunde, die gattungsgemäße, der Verminderung der NOₓ-Emission und der Leistungssteigerung dienende Vorrichtung zum Einspritzen von Wasser oder Wasserdampf zu vereinfachen und so zu gestalten, dass die Duschmischung des Einspritzmediums mit der Verbrennungsluft verbessert wird.

Die Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Gasturbinenanlagen mit extern angeordneten Brennkammern und mit außenliegenden Verbindungsgehäusen zwischen dem Kompressoraustritt und dem Brennkammereintritt sind an sich bekannt (z. B. Taschenbuch für den Maschinenbau / Dubbel 14. Aufl. 1981 Seite 932). Im Rahmen der Erfindung wird diese Anordnung dazu benutzt, um die Einspritzdüsen in dem Krümmer des Verbindungsgehäuses unterzubringen. Die freie Zugänglichkeit des Verbindungsgehäuses liefert sehr gute Voraussetzungen für die optimale Anordnung und freie Gestaltung der Einspritzdüsen. Hierdurch ist die Zielsetzung einer bestmöglichen Vermischung von Wasser oder Wasserdampf mit der Verbrennungsluft sowohl aus technischer Sicht als auch aus Sicht der Herstellungskosten erreichbar.

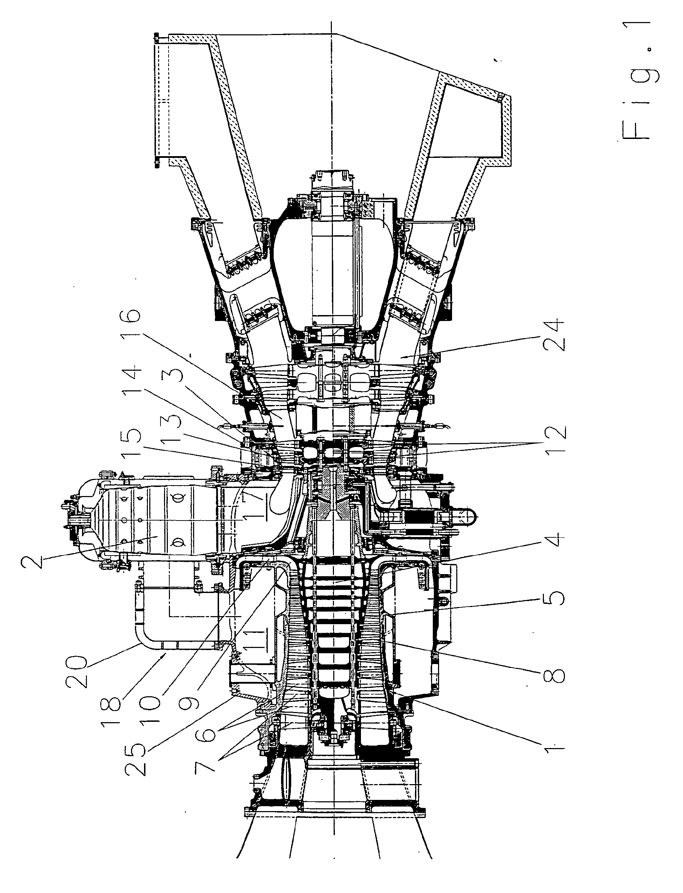

Mehrere Ausführungsbeispiele der Erfindung sind in der Zeichnung dargestellt und werden im Folgenden näher erläutert. Es zeigen
Fig. 1 den Längsschnitt durch eine Gasturbinenanlage und
Fig.2 bis Fig. 4 verschiedene Ausgestaltungen der Einzelheit Z nach Fig. 1.

Die dargestellte Gasturbinenanlage umfasst einen Kompressor 1, eine oder mehrere externe Brennkammern 2, eine Hochdruckgasturbine 3 und eine nachfolgende Nutzleistungsturbine 24.

Der Kompressor 1 der Gasturbinenanlage besteht aus einem Rotor 4, der in einem Gehäuse 5 umläuft und auf seinem Umfang mit mehreren Reihen von Laufschaufeln 6 bestückt ist. Vor jeder Reihe von Laufschaufeln 6 ist eine Reihe von feststehenden Leitschaufeln 7 angeordnet, die in dem Gehäuse 5 befestigt sind und mit den Laufschaufeln 6 in einen ringförmigen Strömungskanal 8 zwischen dem Rotor 4 und dem Gehäuse 5 hineinragen. Der ringförmige Strömungskanal 8 geht hinter der Leitschaufelreihe, die der letzten Reihe der Laufschaufeln 6 folgt, in ein Radiallaufrad 9 mit anschließendem Radialdiffusor 10 über. Hinter dem Radialdiffusor 10 erfolgt eine Umlenkung mit axialer Zuströmung in einen Sammelraum 11, der den Austritt des Kompressors 1 darstellt.

Die Hochdruckgasturbine 3 besteht aus einem Rotor 12, der zwei Rotorscheiben umfasst, die jeweils mit einer Vielzahl von Laufschaufeln 13 bestückt sind. Der Rotor 12 der Hochdruckgasturbine 3 ist mit dem Rotor 4 des Kompressors 1 direkt verbunden und läuft in dem Gehäuse 14 um. Jeder Reihe von Laufschaufeln 13 der Hochdruckgasturbine 3 ist eine Reihe von feststehenden Leitschaufeln 15 vorgeschaltet, die an dem Gehäuse 14 befestigt sind und mit den Laufschaufeln 13 in einen ringförmigen Strömungskanal 16 zwischen dem Rotor 12 und dem Gehäuse 14 hineinragen.

Oben auf einem Außengehäuse 25 der Gasturbinenanlage ist eine externe Brennkammer 2 angeordnet. Die Gasturbinenanlage kann auch mit zwei oder mehr Brennkammern anstelle nur der Brennkammer 2 ausgestattet sein. Der Ausgang der Brennkammer 2 ist über ein Gaszuführungsrohr 17 mit dem ringförmigen Strömungskanal 16 der Hochdruckgasturbine 3 verbunden. Sind zwei oder mehr Brennkammern 2 vorgesehen, so vereint das Gaszuführungsrohr 17 die Heißgasströme aller Brennkammern 2.

An den Sammelraum 11 des Kompressors 1 ist ein außenliegendes Verbindungsgehäuse 18 angeschlossen, das die Verbindung zwischen dem Kompressor 1 und jeweils einer der Brennkammern 2 herstellt und die Brennkammer 2 oder die Brennkammern mit komprimierter Verbrennungsluft versorgt. Das Verbindungsgehäuse 18 ist winkelförmig ausgebildet und weist ein radial zur Achse der Gasturbinenanlage verlaufendes Gehäuseteil 19 auf, das über einen Krümmer 20 in ein axial zur Achse der Gasturbinenanlage verlaufendes Gehäuseteil 21 übergeht. Das Gehäuseteil 21 steht mit dem Lufteintritt der Brennkammer 2 oder den Brennkammern in Verbindung.

In dem Krümmer 20 des Verbindungsgehäuses 18 sind mehrere Einspritzdüsen 22 angeordnet, die mit Bohrungen 23 in der Wandung des Krümmers 20 in Verbindung stehen. Hierbei handelt es sich um herkömmliche Düsen. Durch die Einspritzdüsen 22 wird Wasser oder Wasserdampf in die komprimierte Verbrennungsluft vor deren Eintreten in die Brennkammer 2 eingespritzt.

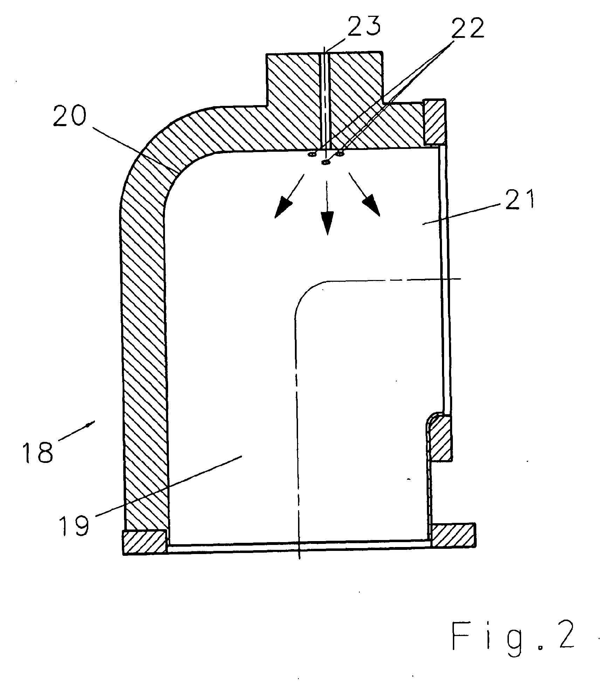

Die Einspritzdüsen 22 sind bei einem ersten bevorzugten Ausführungsbeispiel in dem Kopfbereich des Krümmers 20 angeordnet und gegen die Strömungsrichtung der radial aus dem Kompressor 1 austretenden Verbrennungsluft gerichtet (Fig. 2).

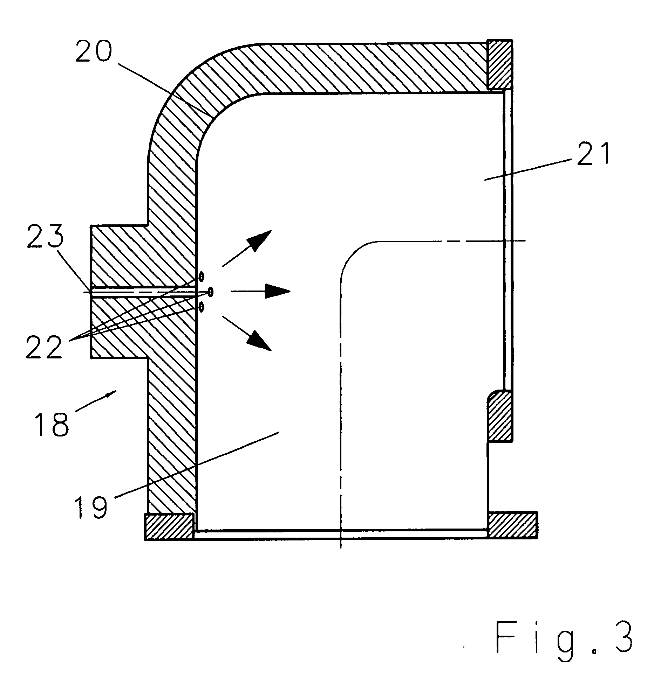

Bei einem zweiten bevorzugten Ausführungsbeispiel sind die Einspritzdüsen 22 in der Stirnwand des Krümmers 20 angeordnet und axial auf die in die Brennkammer 2 eintretende Verbrennungsluft gerichtet (Fig. 3).

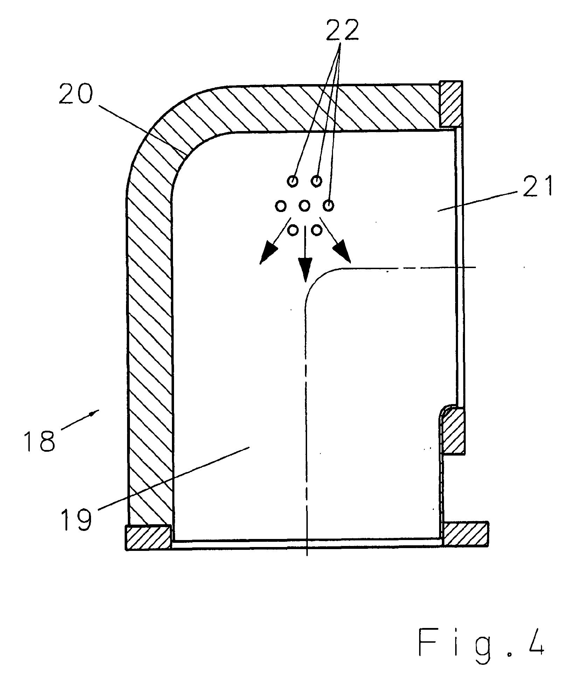

Weiterhin sind bei einem dritten bevorzugten Ausführungsbeispiel die Einspritzdüsen 22 in den Seitenwänden des Krümmers 20 seitlich zu der Strömungsrichtung der radial aus dem Kompressor 1 austretenden Verbrennungsluft und axial auf die in die Brennkammer 2 eintretende Verbrennungsluft gerichtet (Fig. 4).

## Patentansprüche

1. Vorrichtung zum Einspritzen von Wasser oder Wasserdampf in das Arbeitsmittel einer Gasturbinenanlage, bestehend aus einem Kompressor (1), einer oder mehreren Brennkammern (2) einer Hochdruckgasturbine (3) und einer Nutzleistungsturbine (24), wobei das Wasser oder der Wasserdampf in den Strom der von dem Kompressor (1) komprimierten Verbrennungsluft eingespritzt wird, **dadurch gekennzeichnet, dass** Einspritzdüsen (22) in einem Krümmer (20) eines außenliegenden Verbindungsgehäuses (18) angeordnet sind und dass das Verbindungsgehäuse (18) aus einem radialen, mit dem Austritt des Kompressors (1) verbundenen Gehäuseteil (19) und aus einem axialen, mit dem Eintritt der Brennkammer (2) verbundenen Gehäuseteil (21) besteht.

2. Vorrichtung nach Anspruch 1, **dadurch gekennzeichnet, dass** die Einspritzdüsen (22) gegen die Strömungsrichtung der radial aus dem Kompressor (1) austretenden Verbrennungsluft gerichtet angeordnet sind.

3. Vorrichtung nach Anspruch 1, **dadurch gekennzeichnet, dass** die Einspritzdüsen (22) in die Strömungsrichtung der axial in die Brennkammer (2) eintretenden Verbrennungsluft gerichtet angeordnet sind.

4. Vorrichtung nach Anspruch 1, **dadurch gekennzeichnet, dass** die Einspritzdüsen (22) seitlich zu der Strömungsrichtung der radial aus dem Kompressor (1) austretenden Verbrennungsluft und axial auf die in die Brennkammer (2) eintretende Verbrennungsluft gerichtet angeordnet sind.

## Claims

1. Device for injection of water or water steam into the working medium of a gas turbine plant, consisting of a compressor (1), one or more combustion chambers (2) of a high-pressure gas turbine (3) and a useful power turbine (24), wherein the water or the water steam is injected into the flow of the combustion air compressed by the compressor (1), **characterised in that** injection nozzles (22) are arranged in an elbow (20) of an externally disposed connecting housing (18) and that the connecting housing (18) consists of a radial housing part (19) connected with the outlet of the compressor (1) and an axial housing part (21) connected with the inlet of the combustion chamber (2).

2. Device according to claim 1, **characterised in that** the injection nozzles (22) are arranged to be oriented against the flow direction of the combustion air radially issuing from the compressor (1).

3. Device according to claim 1, **characterised in that** the injection nozzles (22) are arranged to be oriented in the flow direction of the combustion air axially entering the combustion chamber (2).

4. Device according to claim 1, **characterised in that** the injection nozzles (22) are arranged to be oriented laterally with respect to the flow direction of the combustion air radially issuing from the compressor (1) and axially onto the combustion air entering the combustion chamber (2).

## Revendications

1. Dispositif d'injection d'eau ou de vapeur d'eau dans le fluide de travail d'une installation de turbine à gaz, composé d'un compresseur (1), d'une ou plusieurs chambres de combustion (2) d'une turbine à gaz à haute pression (3) et d'une turbine de puissance utile (24), l'eau ou la vapeur d'eau étant injectée dans le courant de l'air comburant comprimé par le compresseur (1), **caractérisé en ce que** les buses d'injection (22) sont disposées dans un collecteur (20) d'un carter de liaison extérieur (18) et que le carter de liaison (18) est composé d'une partie de carter (19) radiale reliée à la sortie du compresseur (1) et d'une partie de carter (21) axiale reliée à l'entrée de la chambre de combustion (2).

2. Dispositif selon la revendication 1, **caractérisé en ce que** les buses d'injection (22) sont disposées orientées contre la direction d'écoulement de l'air comburant sortant radialement du compresseur (1).

3. Dispositif selon la revendication 1, **caractérisé en ce que** les buses d'injection (22) sont disposées orientées dans la direction d'écoulement de l'air comburant entrant axialement dans la chambre de combustion (2).

4. Dispositif selon la revendication 1, **caractérisé en ce que** les buses d'injection (22) sont disposées orientées latéralement par rapport à la direction d'écoulement de l'air comburant sortant radialement du compresseur (1) et axialement sur l'air comburant entrant dans la chambre de combustion (2).
